(19) Europäisches Patentamt / European Patent Office / Office européen des brevets

(11) **EP 3 002 849 B1**

(12) **EUROPEAN PATENT SPECIFICATION**

(45) Date of publication and mention of the grant of the patent:
**07.11.2018 Bulletin 2018/45**

(51) Int Cl.:
*H02J 7/02* *(2016.01)*   *H02J 50/12* *(2016.01)*
*H02J 50/80* *(2016.01)*   *H02J 7/00* *(2006.01)*
*B60L 11/18* *(2006.01)*

(21) Application number: **14800960.8**

(22) Date of filing: **21.05.2014**

(86) International application number:
**PCT/JP2014/063523**

(87) International publication number:
**WO 2014/189095 (27.11.2014 Gazette 2014/48)**

(54) **BIDIRECTIONAL CONTACTLESS POWER SUPPLY DEVICE**

BIDIREKTIONALES KONTAKTLOSES STROMVERSORGUNGSSYSTEM

DISPOSITIF D'ALIMENTATION BIDIRECTIONNEL SANS CONTACT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2013 JP 2013107189**

(43) Date of publication of application:
**06.04.2016 Bulletin 2016/14**

(73) Proprietor: **Technova Inc.**
**Tokyo 100-0011 (JP)**

(72) Inventors:
• **YASUDA, Tomio**
  **Tokyo 100-0011 (JP)**
• **NORIGOE, Isami**
  **Tokyo 100-0011 (JP)**
• **ISAGO, Tomiyasu**
  **Tokyo 100-0011 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(56) References cited:
**WO-A2-2011/127449       WO-A2-2011/127449**
**JP-A- 2011 176 914       US-A1- 2002 057 075**
**US-A1- 2011 149 606**

• **SHIGERU MOCHIZUKI: 'Study of Bidirectional Contactless Power Transfer Systems' PAPERS OF TECHNICAL MEETING ON SEMICONDUCTOR POWER CONVERTER, SPC, IEE JAPAN vol. SPC-11, no. 176 -, 01 December 2011, pages 23 - 28, XP008182511**

## Description

TECHNICAL FIELD

The present invention relates to a contactless power supply device which supplies power to a secondary battery of a moving body such as an electric vehicle in a contactless manner, which realizes bidirectional power supply in which power stored in the secondary battery may be used by a power system and in house as necessary.

BACKGROUND ART

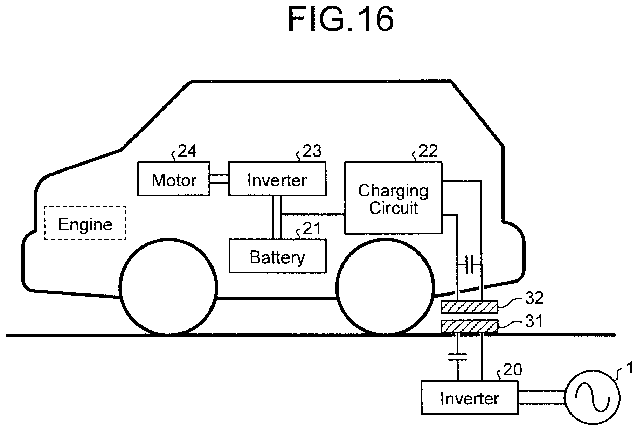

A contactless power supply method to supply power in a contactless manner by using electromagnetic induction between a primary coil (power transmitting coil) 31 located on a ground side and a secondary coil (power receiving coil) 32 mounted on a vehicle side as illustrated in FIG. 16 is known as a charging method of a secondary battery mounted on an electric vehicle and a plug-in hybrid vehicle. High-frequency alternating current supplied to the power transmitting coil 31 is generated from alternating current of a commercial power source 1 by an inverter 20. The high-frequency alternating current received by the power receiving coil 32 is converted to direct current by a charging circuit 22 to be stored in a secondary battery 21. The stored direct current is converted to the alternating current by an inverter 23 for driving a motor 24.

Recently, "V2H" (vehicle to home) and "V2G" (vehicle to grid) in which surplus power stored in the secondary battery of the electric vehicle (EV) is used in house and a power grid draw increasing attention.

Nonpatent Literature 1 to be described discloses a device in which bidirectional contactless power supply may be performed at the time of G2V and V2G with minimum change in a contactless power supply device for "G2V" (grid to vehicle).

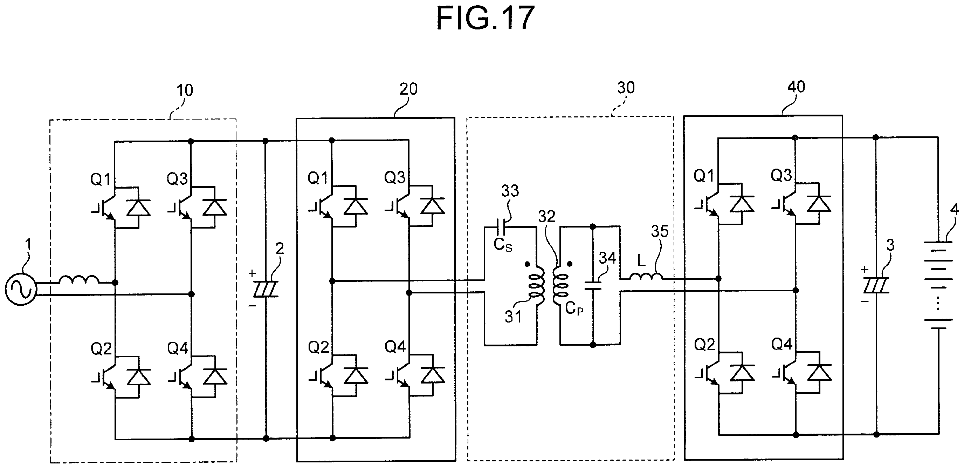

In this device, as illustrated in FIG. 17, a series capacitor Cs 33 is connected to the primary coil 31 on one side of a contactless power supply transformer and a parallel capacitor Cp 34 and a series reactor L 35 are connected to the secondary coil 32 on the other side (this contactless power supply transformer is referred to as "SPL-method contactless power supply transformer").

Inverters 20 and 40 are connected to a system side and a vehicle side of an SPL-method contactless power supply transformer 30 and a bridge inverter 10 which converts the alternating current of the commercial power source 1 to the direct current at the time of G2V is further connected to the system side through a smoothing capacitor 2. A battery 4 is connected to the vehicle side through a smoothing capacitor 3.

At the time of G2V, the inverter 20 converts the direct current converted by the bridge inverter 10 to the high-frequency alternating current. On the other hand, the inverter 40 on a power receiving side serves as a full-wave rectifier only by diodes with all IGBTs (insulated gate bipolar transistors) turned off and rectifies the high-frequency alternating current received by the secondary coil 32.

At the time of V2G, the inverter 40 converts the direct current output from the battery 4 to the high-frequency alternating current. On the other hand, the inverter 20 on the system side serves as the full-wave rectifier which rectifies the high-frequency alternating current received by the primary coil 31 with all the IGBTs turned off. The bridge inverter 10 converts the direct current output from the inverter 20 to the alternating current at a frequency of the commercial power source 1.

In this device, the bidirectional contactless power supply with high power supply efficiency becomes possible only by adding the series reactor L to an SP-method contactless power supply transformer.

Nonpatent Literature 1: Tomio YASUDA, Kazuhiko IDA, Shigeru ABE, Yasuyoshi KANEKO, and Soichiro NAKADACHI, "Bidirectional Contactless Power Supply System" Annual Congress (Autumn) of Society of Automotive Engineers of Japan 85-20125755 (October 3, 2012)

WO 2011/127449 A2 discloses a bidirectional wireless power transceiver, comprising a bidirectional power converter configured to convert a power input signal to an AC power output signal at a wireless power operating frequency when configured in transmit mode and convert a received power AC signal at the wireless power operating frequency to a DC power output signal when configured in receive mode and an antenna operably configured to generate an electromagnetic near field in a coupling mode region at the wireless power operating frequency from the AC power output signal when configured in transmit mode, and generate the received power AC signal from the electromagnetic near field in the coupling mode region at the operating frequency when configured in receive mode.

DISCLOSURE OF INVENTION

PROBLEM TO BE SOLVED BY THE INVENTION

The present invention is achieved in view of the above, and an object thereof is to provide a bidirectional contactless power supply device capable of easily controlling charging at the time of G2V and controlling power supply at the time of V2G with a further simplified system configuration as compared to the device disclosed in the Nonpatent Literature 1.

MEANS FOR SOLVING PROBLEM

According to one aspect of the present invention, a bidirectional contactless power supply device is configured to supply power by an electromagnetic induction effect from a primary-side coil to a secondary-side coil and from the secondary-side coil to the primary-side coil, the primary-side coil connected in series to a resonance capacitor on a primary side , the secondary-side coil connected in series to a resonance capacitor on a secondary side , the primary-side coil and the secondary-side coil arranged with a gap, the bidirectional contactless power supply device comprising: a first power converter connected to the primary-side coil through the resonance capacitor on the primary side; a second power converter connected to the first power converter; a third power converter connected to the secondary-side coil through the resonance capacitor on the secondary side; and a controller which controls the first power converter, the second power converter, and the third power converter, the bidirectional contactless power supply device characterized in that the first, second, and third power converters perform operation to convert direct current to alternating current and operation to convert the alternating current to the direct current under the control of the controller, the second power converter converts the alternating current supplied from a commercial power source to the direct current, the first power converter converts the direct current input from the second power converter to high-frequency alternating current to output to the primary-side coil, and the third power converter converts the high-frequency alternating current input from the secondary-side coil to the direct current to supply to an electric storage device when the power is supplied from the primary-side coil to the secondary-side coil, the third power converter converts the direct current supplied from the electric storage device to the high-frequency alternating current to output to the secondary-side coil, the first power converter converts the high-frequency alternating current input from the primary-side coil to the direct current, and the second power converter converts the direct current input from the first power converter to the alternating current at a frequency of the commercial power source to output when the power is supplied from the secondary-side coil to the primary-side coil, and the first power converter is driven with constant voltage by the controller when the power is supplied from the primary-side coil to the secondary-side coil, and the third power converter is driven with constant current by the controller when the power is supplied from the secondary-side coil to the primary-side coil.

An SS-method contactless power supply transformer in which a series resonance capacitor is connected to each of the primary-side and secondary-side coils has an "immittance conversion characteristic" that constant current is obtained on the secondary side when the primary side is driven with constant voltage and the constant voltage is obtained on the secondary side when the primary side is driven with the constant current. In the bidirectional contactless power supply device of the present invention, the primary side is driven with the constant voltage at the time of G2V in which the electric storage device on the secondary side is charged to charge the electric storage device with the constant current. At the time of V2G in which the power stored in the electric storage device on the secondary side is used outside, the secondary side is driven with the constant current to supply the power of the constant voltage to outside.

Further, in the bidirectional contactless power supply device according to another aspect of the present invention, it is desirable that the electric storage device is a lithium secondary battery or an electric double layer capacitor.

Although it is said that power supply efficiency is not increased unless a value of a resistance load is decreased (unless received voltage is not decreased) in the SS-method contactless power supply transformer, since the lithium secondary battery and the electric double layer capacitor have small inner resistance, it is possible to charge them with the constant current with high power supply efficiency by the SS-method contactless power supply transformer.

Further, in the bidirectional contactless power supply device according to still another aspect of the present invention, it is desirable to configure that each of the primary-side coil and the secondary-side coil includes an H-shaped core and electric wire, the H-shaped core provided with a pair of parallel magnetic poles and a connector which connects the pair of magnetic poles in a central position between the magnetic poles, the electric wire wound around the connector of the H-shaped core.

The power supply efficiency and the resistance load considered to be weaknesses of the SS-method may be improved by increasing the number of windings of the contactless power supply transformer and the number of windings of the coil may be easily increased by using an H-shaped core.

EFFECT OF THE INVENTION

A bidirectional contactless power supply device of the present invention may simplify a system configuration. It is possible to charge an electric storage device with constant current by driving a high-frequency power source with constant voltage at the time of G2V and it is possible to supply power with the constant voltage to a system side by driving the high-frequency power source with constant current at the time of V2G.

## BRIEF DESCRIPTION OF DRAWINGS

FIG. 1 is a block diagram illustrating a bidirectional contactless power supply device according to an embodiment of the present invention;

FIG. 2 is a view illustrating a mode at the time of G2V of the bidirectional contactless power supply device according to the embodiment of the present invention;

FIG. 3 is a view illustrating a mode at the time of V2G of the bidirectional contactless power supply device according to the embodiment of the present invention;

FIG. 4 is a view illustrating a T-shaped equivalent circuit of an SS-method contactless power supply transformer;

FIG. 5 is a view illustrating specifications of a coil used in an experiment;

FIG. 6 is a planar view of the coil illustrated in FIG. 5;

FIG. 7 is a view illustrating a winding state of electric wire of the coil illustrated in FIG. 5;

FIG. 8 is a view illustrating a state in which cases in which the coils are accommodated are opposed to each other;

FIG. 9 is a view illustrating a transformer constant of the coil;

FIG. 10 is a view illustrating measured results;

FIG. 11 is a view illustrating power supply efficiency when a resistance load varies;

FIG. 12 is a view illustrating input (output) voltage (current) waveforms at the time of G2V;

FIG. 13 is a view illustrating the input (output) voltage (current) waveforms at the time of V2G;

FIG. 14 is a view illustrating the power supply efficiency when a gap length is changed;

FIG. 15 is a view illustrating results of measurement of a relationship between load resistance and charging current with different gap lengths and different positional misalignments in front-rear and right-left directions;

FIG. 16 is a view illustrating a system in which contactless power supply is performed to a secondary battery of a vehicle; and

FIG. 17 is a view illustrating a conventional bidirectional contactless power supply device.

## BEST MODES FOR CARRYING OUT THE INVENTION

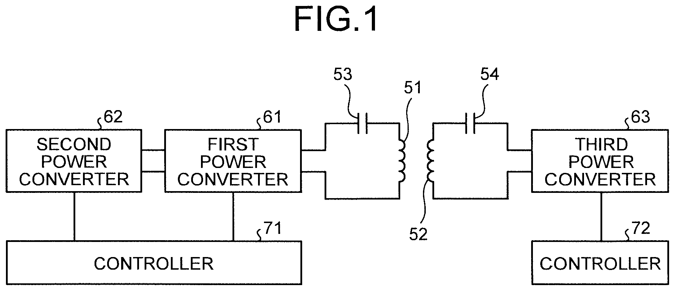

FIG. 1 is a block diagram of a configuration of a bidirectional contactless power supply device according to an embodiment of the present invention.

Resonance capacitors 53 and 54 are connected in series to a primary-side coil 51 and a secondary-side coil 52, respectively, of a contactless power supply transformer of this device. The contactless power supply transformer formed of the primary-side coil 51 and the secondary-side coil 52 to which the resonance capacitors 53 and 54 are connected in series, respectively, is referred to as a "SS-method contactless power supply transformer".

A first power converter 61 is connected to a primary side of the SS-method contactless power supply transformer and a second power converter 62 is connected to the first power converter 61. A third power converter 63 is connected to a secondary side. The first and second power converters 61 and 62 are controlled by a controller 71 and the third power converter 63 is controlled by a controller 72. The first, second, and third power converters 61, 62, and 63 perform operation to convert direct current to alternating current and operation to convert the alternating current to the direct current under the control of the controllers 71 and 72.

In the bidirectional contactless power supply device, at the time of G2V, the second power converter 62 converts the alternating current supplied from a commercial power source to the direct current and the first power converter 61 converts the direct current input from the second power converter 62 to high-frequency alternating current. The converted high-frequency alternating current is input to the primary-side coil 51 of the SS-method contactless power supply transformer and the high-frequency alternating current is induced in the secondary-side coil 52 opposed to the primary-side coil 51 with a gap therebetween by an electromagnetic induction effect. The third power converter 63 converts the high-frequency alternating current input from the secondary-side coil 52 to the direct current. The converted direct current is supplied to an electric storage device of a vehicle to be stored.

On the other hand, at the time of V2G, the third power converter 63 converts the direct current supplied from the electric storage device to the high-frequency alternating current. The converted high-frequency alternating current is input to the secondary-side coil 52 of the SS-method contactless power supply transformer and the high-frequency alternating current is induced in the primary-side coil 51. The first power converter 61 converts the high-frequency alternating current input from the primary-side coil 51 to the direct current and the second power converter 62 converts the direct current input from the first power converter 61 to the alternating current at a frequency of the commercial power source. The alternating current at a commercial frequency converted by the second power converter 62 is supplied to a power grid or supplied to home appliances and the like.

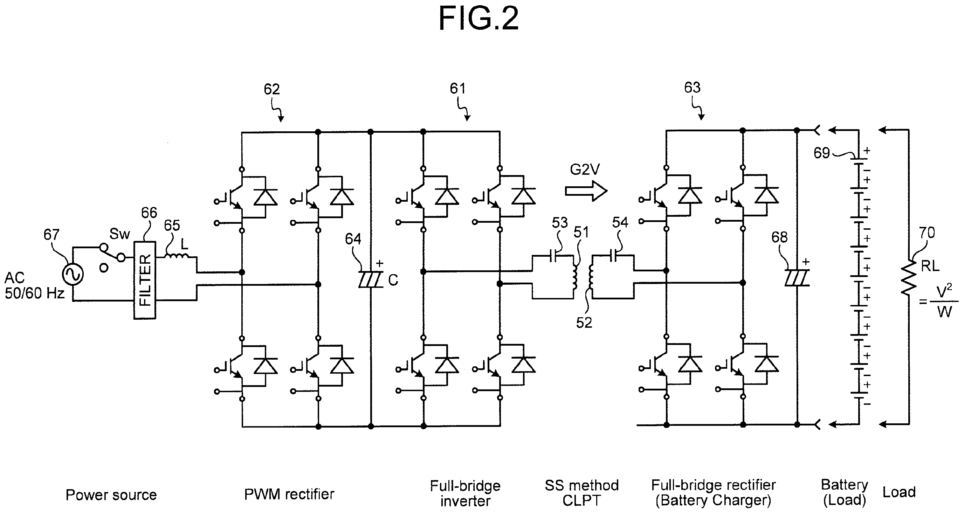

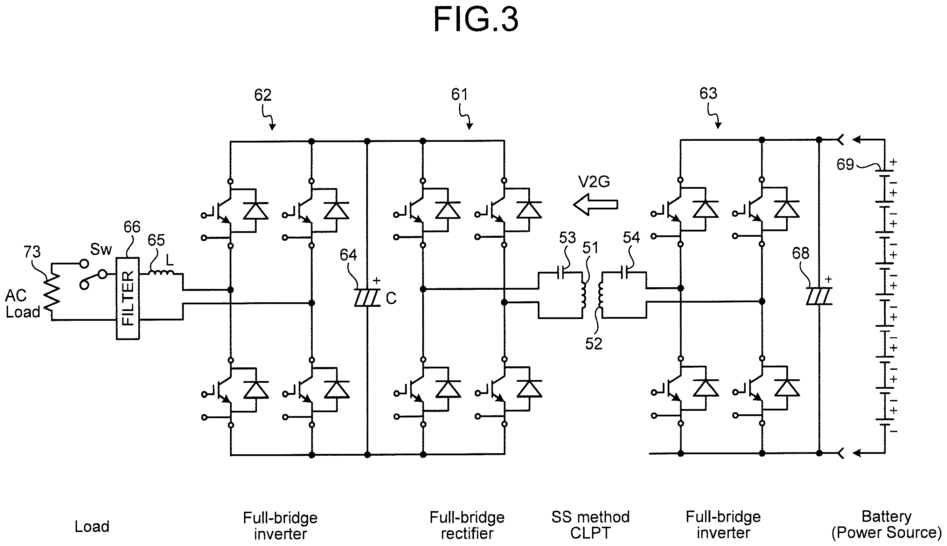

FIGS. 2 and 3 illustrate the bidirectional contactless power supply device according to the embodiment of the present invention. FIG. 2 illustrates a configuration at the time of G2V and FIG. 3 illustrates the configuration at the time of V2G.

The second power converter 62 of this device being a converter operating as a PWM rectifier at the time of G2V and operating as a full-bridge inverter at the time of V2G includes four switching units each of which is formed of a switching device formed of an IGBT and a feedback diode connected in anti-parallel to the switching device.

The first power converter 61 being a converter operating as the full-bridge inverter at the time of G2V and operating as a full-bridge rectifier at the time of V2G includes four switching units each of which is formed of the IGBT and the feedback diode.

The third power converter 63 being a converter operating as the full-bridge rectifier at the time of G2V and operating as the full-bridge inverter at the time of V2G includes four switching units each of which is formed of the IGBT and the feedback diode.

The second power converter 62 is connected to the first power converter 61 through a smoothing capacitor 64 and is connected to a commercial power source 67 or an alternating current load 73 through a reactor 65 and a filter 66 in order to inhibit entrance of noise to a system.

The third power converter 63 is connected to an electric storage device 69 or a load 70 through a smoothing capacitor 68.

Meanwhile, the controller is not illustrated in FIGS. 2 and 3.

At the time of G2V, the second power converter 62 generates the direct current from the alternating current of the commercial power source 67 under PWM control of the controller 71. The generated direct current is smoothed by the smoothing capacitor 64 to be input to the first power converter 61. The first power converter 61 generates the high-frequency alternating current at a frequency $f_0$ from the input direct current under the PWM control of the controller 71.

At that time, the controller 71 monitors voltage of the direct current input to the first power converter 61 and controls the first and second power converters 61 and 62 for constant voltage driving of the primary-side coil 51.

The alternating current at the frequency $f_0$ generated by the first power converter 61 is input to the primary-side coil 51 and the alternating current at the frequency $f_0$ is induced in the secondary-side coil 52.

The third power converter 63 on the secondary side converts the high-frequency alternating current input from the secondary-side coil 52 to the direct current under the control of the controller 72. At that time, the controller 72 turns off all the IGBTs of the third power converter 63 and allows the third power converter 63 to operate as a full-wave rectifier only by the diodes.

The direct current generated by the third power converter 63 is smoothed by the smoothing capacitor 68 to be stored in the electric storage device 69.

On the other hand, at the time of V2G, the third power converter 63 converts the direct current input from the electric storage device 69 to the high-frequency alternating current at the frequency $f_0$ under the PWM control of the controller 72. At that time, the controller 72 controls the third power converter 63 for constant current driving of the secondary-side coil 52.

The alternating current at the frequency $f_0$ generated by the third power converter 63 on the secondary side is input to the secondary-side coil 52 and the alternating current at the frequency $f_0$ is induced in the primary-side coil 51.

The first power converter 61 on the primary side converts the high-frequency alternating current input from the primary-side coil 51 to the direct current under the control of the controller 71. At that time, the controller 71 turns off all the IGBTs of the first power converter 61 and allows the first power converter 61 to operate as the full-wave rectifier only by the diodes.

The direct current generated by the first power converter 61 is smoothed by the smoothing capacitor 64 to be input to the second power converter 62.

The second power converter 62 converts the input direct current to the alternating current at the frequency of the commercial power source. The alternating current at the commercial frequency converted by the second power converter 62 is supplied to the power grid, the home appliances and the like.

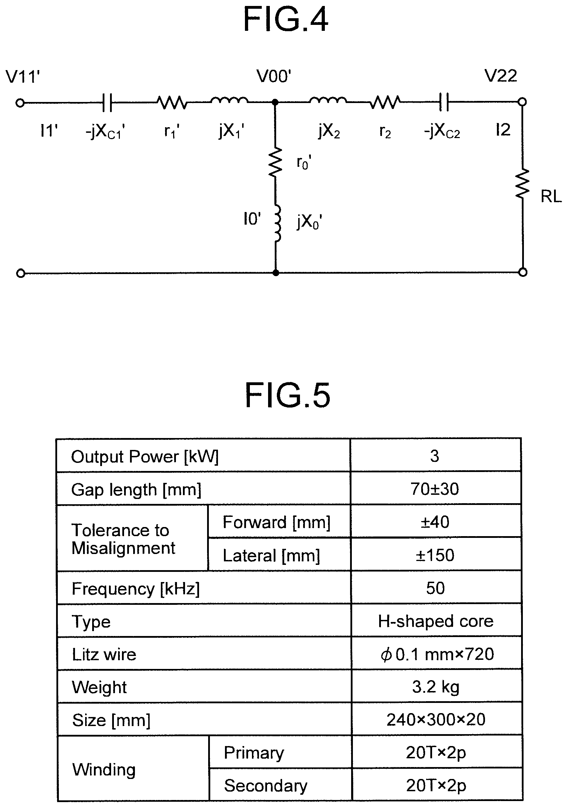

FIG. 4 illustrates a T-shaped equivalent circuit obtained by secondarily side conversion of the SS-method contactless power supply transformer.

A reference signal of a converted primary-side constant is represented with "'".

In FIG. 4, $V_{11}$ and $I_1$ represent voltage and current on the primary side (G side) and $V_{22}$ and $I_2$ represent voltage and current on the secondary side (V side). $V_{00}$ and $I_0$ represent potential and current serving as references of the two coils.

Herein, supposing that

$C_1$: G-side resonance capacitor,

$C_2$: V-side resonance capacitor,

$L_1$: self inductance of G-side transformer,

$l_1$: leakage inductance of G-side transformer,

$l_{01}$: excitation inductance of G-side transformer,

$r_0$: equivalent series resistance of G-side transformer excitation coil,

$r_1$: equivalent series resistance of G-side transformer,
$L_2$: self inductance of V-side transformer,
$l_2$: leakage inductance of V-side transformer,
$l_{02}$: excitation inductance of V-side transformer,
$r_2$: equivalent series resistance of V-side transformer,
$R_L$: equivalent series resistance of load,

$$L_1 = l_1 + l_{01},$$

$$L_2 = l_2 + l_{02},$$

$a = n_1/n_2$: winding ratio of transformer coils,
values illustrated in FIG. 4 are represented by following equations.

$$xc_1' = \frac{a^2}{\omega_0 C_1} \tag{1}$$

$$r_1' = \frac{r_1}{a^2} \tag{2}$$

$$x_1' = \frac{\omega_0 l_1}{a^2} \tag{3}$$

$$r_0' = \frac{r_0}{a^2} \tag{4}$$

$$x_0' = \frac{\omega_0 l_{01}}{a^2} \tag{5}$$

$$x_2 = \omega_0 l_2 \tag{6}$$

$$xc_2 = \frac{1}{\omega_0 C_2} \tag{7}$$

Values of $C'_1$ and $C_2$ are determined by equations 8 and 9 such that they resonate with the self inductance of the G-side transformer coil and that of the V-side transformer coil at the power source frequency $f_0$.

$$xc_1' = \frac{a^2}{\omega_0 C_1} = x_1' + x_0' \tag{8}$$

$$xc_2 = \frac{1}{\omega_0 C_2} = x_0' + x_2 \tag{9}$$

At that time, since values of $r_0$, $r_1$, and $r_2$ are small as compared to each inductance value, so that relationships represented by equations 10 and 11 are satisfiec between input voltage (current) and output current (voltage) in disregard of them.

$$V11' = -jx'_0 I_2 \qquad (10)$$

$$I1' = -j\frac{1}{x'_0}V22 \qquad (11)$$

Transformer efficiency is represented by equation 12 from current of each part in FIG. 4.

$$\eta_{SP} = \frac{R_L I_2^2}{R_L I_2^2 + r'_1 I'^2_2 + r_2 I_2^2} = \frac{R_L}{R_L + r_2 + r'_1\left(\dfrac{R_L}{x_0}\right)^2} \qquad (12)$$

Herein, Q of winding wire is defined by equations 13 and 14 and a binding coefficient k is defined by equation 15.

$$Q_1 = \frac{\omega_0 L_1}{r_1} \qquad (13)$$

$$Q_2 = \frac{\omega_0 L_2}{r_2} \qquad (14)$$

$$k = \frac{M}{\sqrt{L_1 L_2}} \qquad (15)$$

Herein, if equation 16 is satisfied,

$$\frac{1}{k^2}\frac{Q_2}{Q_1} \gg 1 \qquad (16)$$

Transformer maximum power supply efficiency $\eta_{maxG2V}$ and $\eta_{maxV2G}$ may be approximated by equation 17.

$$\eta_{max SS} = \frac{1}{1 + \dfrac{2}{k\sqrt{Q_1 Q_1}}} \qquad (17)$$

Load resistance $R_{LmaxG2V}$ and $R_{LmaxV2G}$ at that time may be approximated by equation 18.

$$R_{L max SS} = kr_2\sqrt{Q_1 Q_2} \qquad (18)$$

Equations 10 and 11 represent that the SS-method contactless power supply transformer has an immittance conversion characteristic, that is to say, a characteristic that constant current is obtained on the secondary side when the primary side is driven with constant voltage and the constant voltage is obtained on the secondary side when the primary side is driven with the constant current.

In this embodiment, the first power converter 61 on the primary side is driven with the constant voltage at the time of G2V by using this characteristic, so that the constant current is output from the third power converter 63 and constant current charging of the electric storage device 69 becomes possible without a special charging circuit provided. The constant current charging is suitable for charging a lithium secondary battery and an electric double layer capacitor with small inner resistance.

Since the third power converter 63 is driven with the constant current at the time of V2G, it is possible to provide power of the constant voltage from the second power converter 62 to the system.

Although it is said that power supply efficiency is not increased unless a value of a resistance load is decreased (that is to say, unless received voltage is not decreased) in the SS-method contactless power supply transformer (refer to Japanese Laid-open Patent Publication No. 2012-244635), equations 17 and 18 represent that it is possible to increase the power supply efficiency and the resistance load by increasing the number of windings of the primary and secondary-side coils 51 and 52 to increase the excitation inductances $l_{01}$ and $l_{02}$.

A result of an experiment performed for confirming this is described.

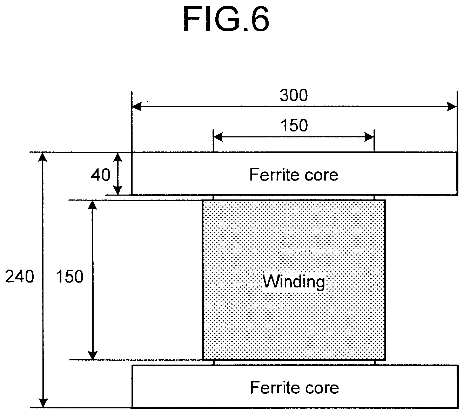

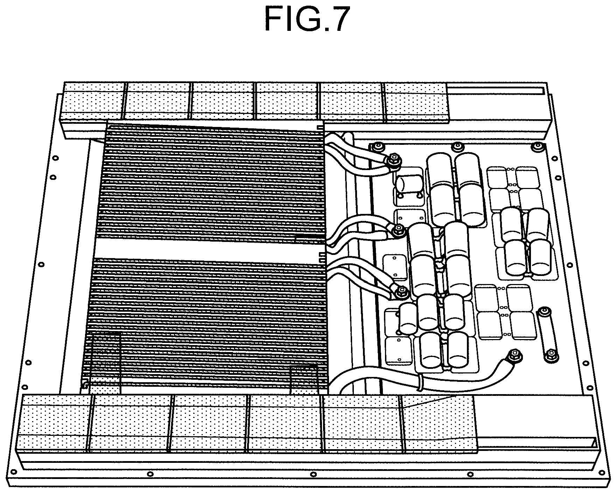

FIG. 5 illustrates specifications of the contactless power supply transformer used for the experiment. Each of the primary and secondary-side coils of the transformer is formed of an H-shaped core provided with a pair of parallel magnetic poles and a connector which connects the pair of magnetic poles in a central position between the magnetic poles with 0.1 mm diameter electric wire (Litz wire) wound around the connector as illustrated in FIG. 6. The H-shaped core has an outer shape of 240 mm $\times$ 300 mm $\times$ 20 mm and the connector is of 150 mm width and 150 mm length. The electric wire is wound by 20 turns at two sites of the connector and the winding wires are electrically connected to each other in parallel as illustrated in FIG. 7.

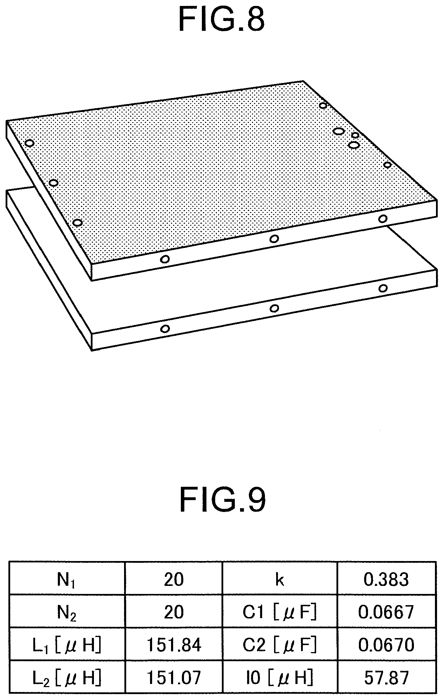

The coils were accommodated in cases illustrated in FIG. 8 so as to be opposed to each other with a 70 mm gap therebetween. In the experiment, the characteristics when a gap length is changed by $\pm$ 30 mm, when an opposing position in a front-rear direction (lateral direction of the H-shaped core) is misaligned by $\pm$ 40 mm, and when an opposing position in a right-left direction (longitudinal direction of the H-shaped core) is misaligned by $\pm$ 150 mm are also measured.

The frequency $f_0$ is set to 50 kHz and an output is set to 3 kW. 25 $\Omega$ of load resistance $R_L$ was used for both G2V and V2G.

Transformer constants of the primary and secondary-side coils are illustrated in FIG. 9.

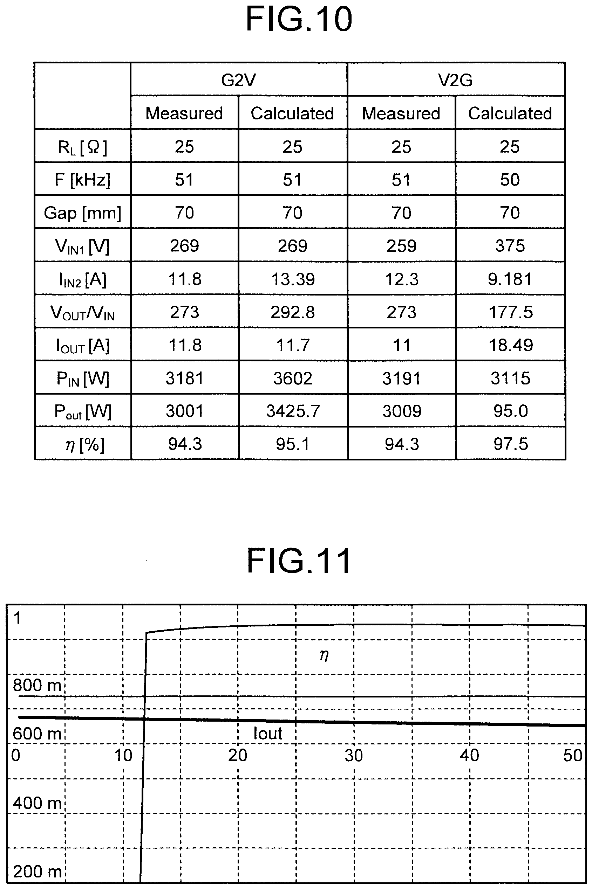

FIG. 10 illustrates experiment results obtained by measurement in a state with the gap set to 70 mm and without misalignment in the front-rear and right-left directions. Power supply efficiency $\eta$ indicates a high value both in an experimental value and in a calculated value.

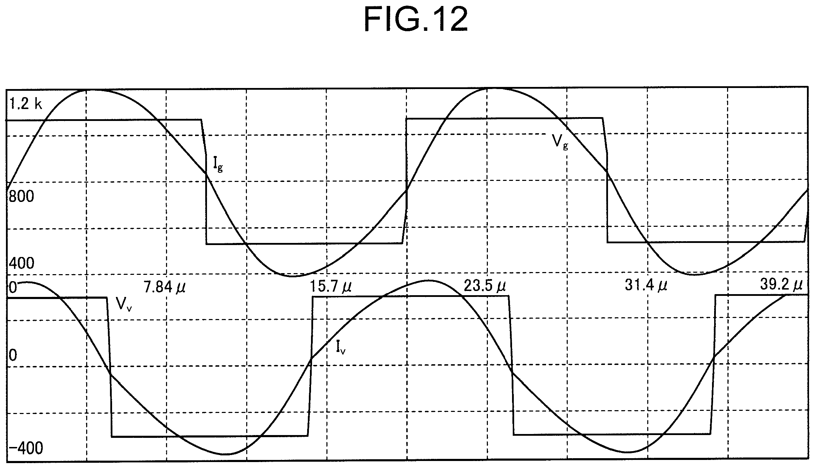

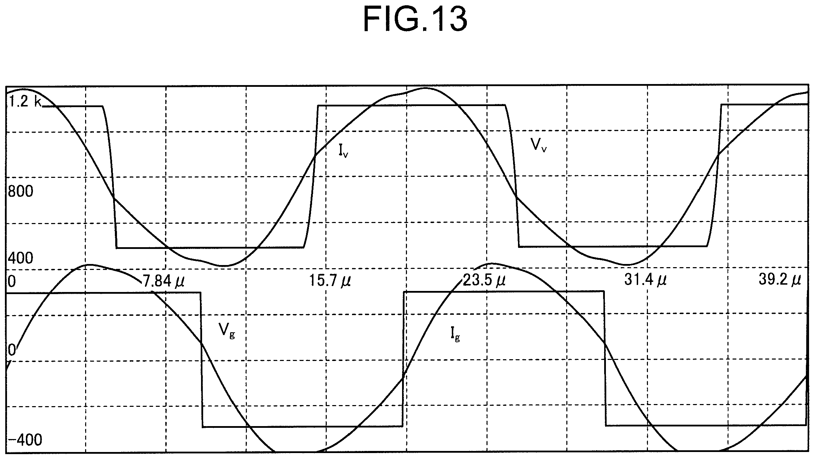

FIG. 11 illustrates the power supply efficiency (experimental value) when the resistance load varies, FIG. 12 illustrates input (output) voltage (current) waveforms at the time of G2V, and FIG. 13 illustrates input (output) voltage (current) waveforms at the time of V2G.

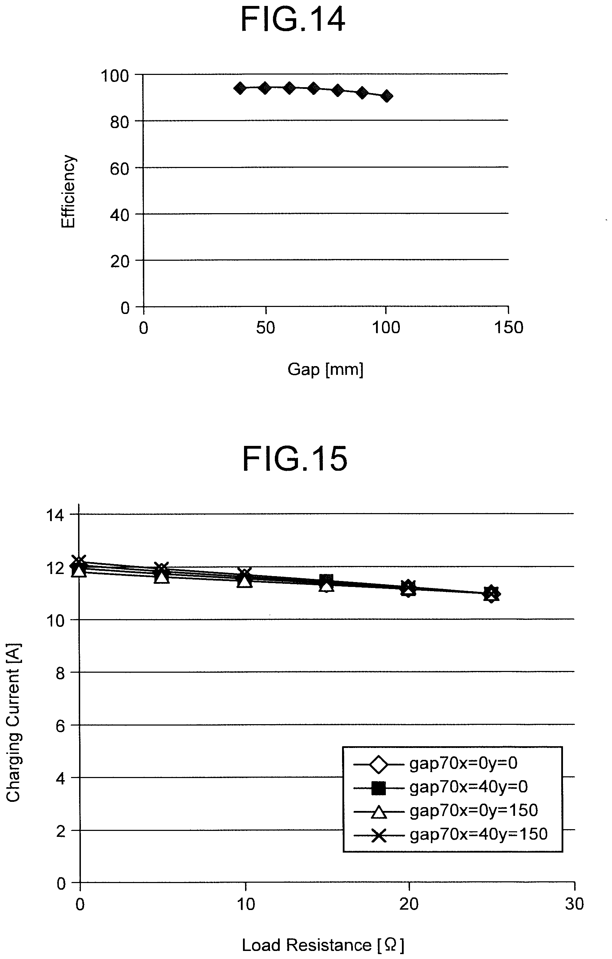

FIG. 14 illustrates the power supply efficiency when the gap length is changed by $\pm$ 30 mm and FIG. 15 illustrates results of measurement of a relationship between the load resistance and charging current with different gap lengths and different positional misalignments in the front-rear and right-left directions.

At the time of G2V, total efficiency including the inverter when the gap is changed by 40 to 100 mm was up to 94.7% and maximum total efficiency with the change within a range of $\pm$ 40 mm in an x direction and $\pm$ 150 mm in a y direction was 94.3%. An equivalent result of the power supply efficiency was also obtained at the time of V2G.

From the experiment, it was confirmed that it is possible to obtain high power supply efficiency by increasing the number of windings of the transformer and increasing the excitation inductance in the SS-method contactless power supply transformer.

Since the electric wire is wound around the connector with a narrow width in the coil obtained by using the H-shaped core, this is advantageous in increasing the number of windings of the electric wire.

It was confirmed that the constant current charging on the secondary side is performed by the constant voltage driving of the voltage converter on the primary side through the experiment.

Meanwhile, although the IGBT (insulated gate bipolar transistor) is herein used as the switching device of the first, second, and third power converters 61, 62, and 63, it is also possible to use another switching device such as a GOT (gate turn off thyristor) and a MOSFET (metal oxide semiconductor field effect transistor).

INDUSTRIAL APPLICABILITY

A bidirectional contactless power supply device of the present invention may be widely used in a moving body on which a secondary battery is mounted such as an electric vehicle, an electric forklift, and an unmanned electric carrier.

EXPLANATIONS OF LETTERS OR NUMERALS

1    COMMERCIAL POWER SOURCE

2    SMOOTHING CAPACITOR
3    SMOOTHING CAPACITOR

| | |
|---|---|
| 4 | BATTERY |
| 10 | BRIDGE INVERTER |
| 20 | INVERTER |
| 23 | INVERTER |
| 24 | MOTOR |
| 30 | CONTACTLESS POWER SUPPLY TRANSFORMER |
| 31 | PRIMARY COIL |
| 32 | SECONDARY COIL |
| 33 | SERIES CAPACITOR Cs |
| 34 | PARALLEL CAPACITOR Cp |
| 35 | SERIES REACTOR L |
| 40 | INVERTER |
| 51 | PRIMARY-SIDE COIL |
| 53 | RESONANCE CAPACITOR |
| 54 | RESONANCE CAPACITOR |
| 61 | FIRST POWER CONVERTER |
| 62 | SECOND POWER CONVERTER |
| 63 | THIRD POWER CONVERTER |
| 64 | SMOOTHING CAPACITOR |
| 65 | REACTOR |
| 66 | FILTER |
| 67 | COMMERCIAL POWER SOURCE |
| 68 | SMOOTHING CAPACITOR |
| 69 | ELECTRIC STORAGE DEVICE |
| 70 | LOAD |
| 71 | CONTROLLER |
| 72 | CONTROLLER |
| 73 | ALTERNATING CURRENT LOAD |

**Claims**

1. A bidirectional contactless power supply device configured to supply power by an electromagnetic induction effect form a primary-side coil (51) to a secondary-side coil (52) and from the secondary-side coil (52) to the primary-side coil (51), the primary-side coil (51) connected in series to a resonance capacitor on a primary side (53), the secondary-side coil (52) connected in series to a resonance capacitor on a secondary side (54), the primary-side coil (51) and the secondary-side coil (52) arranged with a gap, the bidirectional contactless power supply device comprising:

   a first power converter (61) connected to the primary-side coil (51) through the resonance capacitor on the primary side (53);
   a second power converter (62) connected to the first power converter (61);
   a third power converter (63) connected to the secondary-side coil (52) through the resonance capacitor on the secondary side (54); and
   a controller (71, 72) which controls the first power converter (61), the second power converter (62), and the third power converter (63),
   wherein the first, second, and third power converters (61, 62, 63) perform operation to convert direct current to alternating current and operation to convert the alternating current to the direct current under the control of the controller (71, 72);
   the second power converter (62) converts the alternating current supplied from a commercial power source (67) to the direct current, the first power converter (61) converts the direct current input from the second power converter (62) to high-frequency alternating current to output to the primary-side coil (51), and the third power converter (63) converts the high-frequency alternating current input from the secondary-side coil (52) to the direct current to supply to an electric storage device (69) when the power is supplied from the primary-side coil (51) to the secondary-side coil (52);
   the third power converter (63) converts the direct current supplied from the electric storage device (69) to the high-frequency alternating current to output to the secondary-side coil (52), the first power converter (61) converts the high-frequency alternating current input from the primary-side coil (51) to the direct current, and the second power converter (62) converts the direct current input from the first power converter (61) to the alternating current at a frequency of the commercial power source (67) to output when the power is supplied from the secondary-side coil (52) to the primary-side coil (51); **characterized in that**
the first and second power converters (61, 62) are controlled by the controller (71) for constant voltage driving of the primary-side coil when the power is supplied from the primary-side coil (51) to the secondary-side coil (52), and the third power converter (63) is controlled by the controller (72) for constant current driving of the secondary-side coil when the power is supplied from the secondary-side coil (52) to the primary-side coil (51).

2. The bidirectional contactless power supply device according to claim 1, wherein
the electric storage device (69) is a lithium secondary battery or an electric double layer capacitor.

3. The bidirectional contactless power supply device according to claim 1, wherein
each of the primary-side coil (51) and the secondary-side coil (52) includes an H-shaped core and electric wire, the H-shaped core provided with a pair of parallel magnetic poles and a connector which connects the pair of magnetic poles in a central position between the magnetic poles, the electric wire wound around the connector of the H-shaped core.

**Patentansprüche**

1. Bidirektionale kontaktlose Energieversorgungseinrichtung, welche dazu ausgelegt ist, Energie durch eine elektromagnetische Induktionswirkung von einer Primärseiten-Spule (51) zu einer Sekundärseiten-Spule (52) und von der Sekundärseiten-Spule (52) zur Primärseiten-Spule (51) zuzuführen, wobei die Primärseiten-Spule (51) mit einem Resonanzkondensator auf einer Primärseite (53) in Reihe geschaltet ist, die Sekundärseiten-Spule (52) mit einem Resonanzkondensator auf einer Sekundärseite (54) in Reihe geschaltet ist, wobei die Primärseiten-Spule (51) und die Sekundärseiten-Spule (52) mit einem Spalt dazwischen angeordnet sind, wobei die bidirektionale kontaktlose Energieversorgungseinrichtung aufweist:

   einen ersten Energieumwandler (61), welcher durch den Resonanzkondensator auf der Primärseite (53) mit der Primärseiten-Spule (51) verbunden ist;
   einen zweiten Energieumwandler (62), welcher mit dem ersten Energieumwandler (61) verbunden ist;
   einen dritten Energieumwandler (63), welcher durch den Resonanzkondensator auf der Sekundärseite (54) mit der Sekundärseiten-Spule (52) verbunden ist; und
   eine Steuerung (71, 72), welche den ersten Energieumwandler (61), den zweiten Energieumwandler (62) und den dritten Energieumwandler (63) steuert,
   wobei der erste, zweite und dritte Energieumwandler (61, 62, 63) durch das Steuern der Steuerung (71, 72) einen Betrieb durchführen, um Gleichstrom in Wechselstrom umzuwandeln und einen Betrieb durchführen, um den Wechselstrom in den Gleichstrom umzuwandeln;
   der zweite Energieumwandler (62) den von einer kommerziellen Energiequelle (67) zugeführten Wechselstrom in den Gleichstrom umwandelt, der erste Energieumwandler (61) den von dem zweiten Energieumwandler (62) zugeführten Gleichstrom in Hochfrequenz-Wechselstrom zum Ausgeben an die Primärseiten-Spule (51) umwandelt, und der dritte Energieumwandler (63) den von der Sekundärseiten-Spule (52) zugeführten Hochfrequenz-Wechselstrom in Gleichstrom umwandelt, um diesen einer elektrische Speichereinrichtung (69) zuzuführen, wenn die Energie von der Primärseiten-Spule (51) der Sekundärseiten-Spule (52) zugeführt wird;
   der dritte Energieumwandler (63) den von der elektrischen Speichereinrichtung (69) zugeführten Gleichstrom in den Hochfrequenz-Wechselstrom zum Ausgeben an die Sekundärseiten-Spule (52) umwandelt, der erste Energieumwandler (61) den von der Primärseiten-Spule (51) zugeführten Hochfrequenz-Wechselstrom in Gleichstrom umwandelt, und der zweite Energieumwandler (62) den von dem ersten Energieumwandler (61) eingegebenen Gleichstrom zu dem Wechselstrom mit einer Frequenz der kommerziellen Energiequelle (67) zum Ausgeben umwandelt, wenn die Energie von der Sekundärseiten-Spule (52) der Primärseiten-Spule (51) zugeführt wird; **dadurch gekennzeichnet, dass**
   der erste und zweite Energieumwandler (61, 62) von der Steuerung (71) zur konstanten Spannungsansteuerung der Primärseiten-Spule (51) gesteuert werden, wenn die Energie von der Primärseiten-Spule (51) der Sekundärseiten-Spule (51) zugeführt wird, und der dritte Energieumwandler (63) von der Steuerung (71) zur konstanten Stromansteuerung der Sekundärseiten-Spule gesteuert wird, wenn die Energie von der Sekundärseiten-Spule (52) der Primärseiten-Spule (51) zugeführt wird.

2. Bidirektionale kontaktlose Energieversorgungseinrichtung gemäß Anspruch 1, wobei die elektrische Speichereinrichtung (69) eine Lithium-Sekundärbatterie oder ein elektrischer Doppelschichtkondensator ist.

**3.** Bidirektionale kontaktlose Energieversorgungseinrichtung gemäß Anspruch 1, wobei die Primärseiten-Spule (51) und die Sekundärseiten-Spule (52) jeweils einen H-förmigen Kern und elektrischen Draht beinhalten, wobei der H-förmige Kern mit einem Paar paralleler Magnetpole und einem Verbindungsstück versehen ist, welches das Paar Magnetpole in einer Mittenposition zwischen den Magnetpolen verbindet, wobei der elektrische Draht um das Verbindungsstück des H-förmigen Kerns gewickelt ist.

**Revendications**

**1.** Dispositif d'alimentation bidirectionnel sans contact configuré pour fournir de l'énergie par un effet d'induction électromagnétique depuis une bobine du côté primaire (51) jusqu'à une bobine du côté secondaire (52) et depuis la bobine du côté secondaire (52) jusqu'à la bobine du côté primaire (51), la bobine du côté primaire (51) étant connectée en série à un condensateur de résonance d'un côté primaire (53), la bobine du côté secondaire (52) étant connectée en série à un condensateur de résonance d'un côté secondaire (54), la bobine du côté primaire (51) et la bobine du côté secondaire (52) étant agencées avec un espace, le dispositif d'alimentation bidirectionnel sans contact comprenant :

un premier convertisseur d'énergie (61) connecté à la bobine du côté primaire (51) à travers le condensateur de résonance du côté primaire (53) ;

un deuxième convertisseur d'énergie (62) connecté au premier convertisseur d'énergie (61) ;

un troisième convertisseur d'énergie (63) connecté à la bobine du côté secondaire (52) à travers le condensateur de résonance du côté secondaire (54) ; et

un contrôleur (71, 72) qui contrôle le premier convertisseur d'énergie (61), le deuxième convertisseur d'énergie (62) et le troisième convertisseur d'énergie (63),

dans lequel les premier, deuxième et troisième convertisseurs d'énergie (61, 62, 63) réalisent une opération pour convertir un courant continu en un courant alternatif et une opération pour convertir le courant alternatif en courant continu sous le contrôle du contrôleur (71, 72) ;

le deuxième convertisseur d'énergie (62) convertit le courant alternatif fourni par une source d'énergie du commerce (67) en courant continu, le premier convertisseur d'énergie (61) convertit l'entrée de courant continu provenant du deuxième convertisseur d'énergie (62) en un courant alternatif de fréquence élevée en sortie vers la bobine du côté primaire (51), et le troisième convertisseur d'énergie (63) convertit l'entrée de courant alternatif de fréquence élevée provenant de la bobine du côté secondaire (52) en courant continu pour alimenter un dispositif de stockage électrique (69) lorsque l'énergie est fournie depuis la bobine du côté primaire (51) jusqu'à la bobine du côté secondaire (52) ;

le troisième convertisseur d'énergie (63) convertit le courant continu fourni depuis le dispositif de stockage électrique (69) en courant alternatif de fréquence élevée en sortie vers la bobine du côté secondaire (52), le premier convertisseur d'énergie (61) convertit l'entrée de courant alternatif de fréquence élevée provenant de la bobine du côté primaire (51) en courant continu, et le deuxième convertisseur d'énergie (62) convertit l'entrée de courant continu provenant du premier convertisseur d'énergie (61) en courant alternatif à une fréquence de la source d'énergie du commerce (67) en sortie, lorsque l'énergie est fournie de la bobine du côté secondaire (52) à la bobine du côté primaire (51) ; **caractérisé en ce que**

les premier et deuxième convertisseurs d'énergie (61, 62) sont contrôlés par le contrôleur (71) pour un entraînement de tension constante de la bobine du côté primaire lorsque l'énergie est fournie depuis la bobine du côté primaire (51) à la bobine du côté secondaire (52), et le troisième convertisseur d'énergie (63) est contrôlé par le contrôleur (72) pour un entraînement de tension constante de la bobine du côté secondaire lorsque l'énergie est fournie depuis la bobine du côté secondaire (52) à la bobine du côté primaire (51).

**2.** Dispositif d'alimentation bidirectionnel sans contact selon la revendication 1, dans lequel

le dispositif de stockage électrique (69) est une batterie secondaire au lithium ou un condensateur électrique à double couche.

**3.** Dispositif d'alimentation bidirectionnel sans contact selon la revendication 1, dans lequel

chacune parmi la bobine du côté primaire (51) et la bobine du côté secondaire (52) inclut un noyau en forme de H et un fil électrique, le noyau en forme de H étant muni d'une paire de pôles magnétiques parallèles et d'un connecteur qui connecte la paire de pôles magnétiques dans une position centrale entre les pôles magnétiques, le fil électrique étant enroulé autour du connecteur du noyau en forme de H.

# FIG.1

FIG.2

# FIG.3

| Load | Full-bridge inverter | Full-bridge rectifier | SS method CLPT | Full-bridge inverter | Battery (Power Source) |

EP 3 002 849 B1

# FIG.4

V11'                                    V00'                                    V22

I1'    -jX$_{C1}$'    r$_1$'    jX$_1$'         jX$_2$    r$_2$    -jX$_{C2}$    I2

r$_0$'

I0'    jX$_0$'                                                          RL

# FIG.5

| Output Power [kW] | | 3 |
|---|---|---|
| Gap length [mm] | | 70±30 |
| Tolerance to Misalignment | Forward [mm] | ±40 |
| | Lateral [mm] | ±150 |
| Frequency [kHz] | | 50 |
| Type | | H-shaped core |
| Litz wire | | $\phi$0.1 mm×720 |
| Weight | | 3.2 kg |
| Size [mm] | | 240×300×20 |
| Winding | Primary | 20T×2p |
| | Secondary | 20T×2p |

# FIG.6

# FIG.7

# FIG.8

# FIG.9

| $N_1$ | 20 | k | 0.383 |
|---|---|---|---|
| $N_2$ | 20 | C1 [$\mu$F] | 0.0667 |
| $L_1$ [$\mu$H] | 151.84 | C2 [$\mu$F] | 0.0670 |
| $L_2$ [$\mu$H] | 151.07 | l0 [$\mu$H] | 57.87 |

# FIG.10

| | G2V | | V2G | |
|---|---|---|---|---|
| | Measured | Calculated | Measured | Calculated |
| $R_L$ [$\Omega$] | 25 | 25 | 25 | 25 |
| F [kHz] | 51 | 51 | 51 | 50 |
| Gap [mm] | 70 | 70 | 70 | 70 |
| $V_{IN1}$ [V] | 269 | 269 | 259 | 375 |
| $I_{IN2}$ [A] | 11.8 | 13.39 | 12.3 | 9.181 |
| $V_{OUT}/V_{IN}$ | 273 | 292.8 | 273 | 177.5 |
| $I_{OUT}$ [A] | 11.8 | 11.7 | 11 | 18.49 |
| $P_{IN}$ [W] | 3181 | 3602 | 3191 | 3115 |
| $P_{out}$ [W] | 3001 | 3425.7 | 3009 | 95.0 |
| $\eta$ [%] | 94.3 | 95.1 | 94.3 | 97.5 |

# FIG.11

# FIG.12

EP 3 002 849 B1

FIG.13

# FIG.14

# FIG.15

# FIG.16

# FIG.17

EP 3 002 849 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011127449 A2

- JP 2012244635 A

**Non-patent literature cited in the description**

- **TOMIO YASUDA ; KAZUHIKO IDA ; SHIGERU ABE ; YASUYOSHI KANEKO ; SOICHIRO NAKA-DACHI.** Bidirectional Contactless Power Supply System. *Annual Congress (Autumn) of Society of Automotive Engineers of Japan 85-20125755,* 03 October 2012